# EUROPEAN PATENT SPECIFICATION

(11) **EP 3 746 327 B1**
(45) Date of publication and mention of the grant of the patent: **16.03.2022**
(21) Application number: 19705110.5
(22) Date of filing: 31.01.2019
(51) Int. Cl.: B60K 15/03, F01N 3/20, B60K 15/04, B60K 15/035, F16K 24/00

(54) **IMPROVED FILLER HEAD**
VERBESSERTER BEFÜLLERKOPF
TÊTE DE REMPLISSAGE AMÉLIORÉE

(30) Priority: 31.01.2018 EP 18154503
(43) Date of publication of application: 09.12.2020
(73) Proprietor: Plastic Omnium Advanced Innovation And Research, 1130 Bruxelles (BE)
(72) Inventor: WATANABE, Akiko, TOKYO (JP)
(74) Representative: LLR
(86) International application number: PCT/EP2019/052389
(87) International publication number: WO 2019/149824

(56) References cited:
- FR-A1- 3 051 736
- US-A1- 2014 190 981
- US-A1- 2016 297 669

## Description

### FIELD OF THE INVENTION

The invention relates to an improved filler head and in particular an optimized filler head configured to improve refilling of a fluid tank such a urea tank.

### BACKGROUND OF THE INVENTION

Legislation on vehicle and truck emissions stipulates, amongst other things, a reduction in the release of nitrogen oxides NOₓ into the atmosphere. One known way to achieve this objective is to use the "SCR" (shortening from terms "Selective Catalytic Reduction") process which enables the reduction of nitrogen oxides by injection of a reducing agent, such as ammonia, into the exhaust line. Generally, a SCR system comprises a tank for the storage of an aqueous additive, such as a urea solution, a pump for conveying the aqueous additive in the feed line, and a device for metering the desired amount of aqueous additive and injecting it into the exhaust line. The aqueous additive is thus accurately metered and injected into the exhaust gas stream where it is hydrolysed before converting the nitrogen oxide (NOₓ) to nitrogen (N₂) and water (H₂O).

The distribution of urea solution, sometimes called adblue^{®}, is known for trucks for many years. The tank volume being important in the range of trucks, it has been developed distribution system apart from fuel delivery with a filling rate of 40 litres per minute.

It was originally intended to develop dedicated delivery stations to the passenger vehicle with a half lower filling rate (20 litres per minute). However, consumers have noticed that they could already be supplied with the dispensers for trucks and thus have imposed a unique delivery rate in contrast to what was contemplated.

Consequently, the specifications of developed filler system for passage vehicle are obsolete. The filler system can't stand the high filling rate and thus causes filling difficulties (activations of automatic stop included in the distribution nozzle) and even sometimes urea solution projections from the filler head. An example of filler head is disclosed in document US 2014/190981.

### SUMMARY OF THE INVENTION

The invention aims to provide a new filling system of a fluid tank that is able to withstand a high filling rate regardless the volume of the tank, limits fluid projections from the filler head, comprises less components and is easier to manufacture.

Hence, the invention relates to a filler head for a storage system comprising a body with a main part closed by a cover part, and being configured to receive a distribution nozzle of a fluid and configured to be connected, in a tighten manner, to a filling line and a venting line of a fluid tank, the filler head further comprising a buffer volume so as to reduce the speed of flow coming from the venting line, the buffer volume is in one-piece with, that is to say integral with, the main part and is closed by the cover part so as to limit fluid projection from the filler head during refilling characterised **in that** the body comprises a cavity integrated in the main part and in which the fluid is guided to the filling line, a separating device being mounted within the cavity between the main part and the cover part so as to improve the partitioning of the flow coming from the venting line and the flow going to the filling line.

The buffer volume can thus be as far as possible from the tank. Advantageously, the invention allows a better reduction of the speed of the flow coming from the venting line as well as a better bursting of the air bubbles along the wall of the buffer volume regardless the volume of the tank and/or the refilling rate. Moreover, the common closure with the cover part simplifies the structural configuration of the filler head and consequently is easier to manufacture. Finally, the invention allows to produce a limited number of parts thus permitting to improve cycle time and associated costs.

Moreover, the cavity may thus have an enlarged section opposite the filling line so as to avoid the activation of the stop function of the distribution nozzle until the tank is effectively full. The separating device such as baffle can be mounted within the cavity of the body between the main part and the cover part so as to improve the partitioning of the flow coming from the venting line and the flow going to the filling line.

The invention may also include one or more of the following optional features, taken alone or in combination.

The cover part may be a substantially planar part so as to position the buffer volume at the same level/plane than the one of the remaining part of the main part (*i*.*e*. notably the cavity) of the filler head.

The cover part can comprise a protruding guiding element permitting to receive the distribution nozzle. Thus, during refilling, the end of the distribution nozzle is substantially levelled (co-planar) with the buffer volume permitting improving of performance of the latter. Moreover, it permits to limit the number of parts of the filler head.

The protruding guiding element may be closed in a tighten manner by a cap. Thus, fluid cannot be projected outside the filler head. The cap can be removed for refilling the tank with fluid.

The cavity may be separated from the buffer volume by a common wall, an aperture in the common wall allowing the buffer volume to communicate with the cavity. This arrangement allows a high degree of freedom regarding the shape and form of the main part. Indeed, all of the main part is entirely opened permitting an easier manufacture of the filler head. For example, advantageously according to the invention, an edge of the aperture may thus be formed by the cover part, *i.e.* the common wall is simply cut out and the aperture may be totally or partially framed by a surface of the cover part.

The separating device is preferably removable so as to be replaceable. The separating device can thus be replaced with a different geometry to fit another kind or dimensions of nozzle and/or tank.

The separating device can further comprise a venting element including at least one hole that allows the flow of air coming from the venting line to pass through a body of the separating device in order to be expelled outside the filler head.

The separating device can further comprise a shielding element including at least one partial flange and/or at least one transversal rib protruding from the external surface of a body of the separating device. Advantageously, each partial flange mainly clogs the axial passage of urea solution coming from the filling line and/or the transversal ribs mainly restrain the radial passage of urea solution coming from the venting line (passing through the apertures between the cavity and the buffer volume).

In a preferred manner, the shielding element may at least partially surround the hole of the venting element in order to allow only the passage of air through the hole. This embodiment allows any urea solution coming from either the venting line, or the filling line, to be blocked in the cavity so as to return into the tank mainly by the filling line.

The separating device can further comprise a securing element including at least one tenon protruding from the internal wall of the cavity that each cooperates with a corresponding mortise mounted onto the external surface of a body of the separating device. This embodiment permits to mount/remove easily the separating device from the cavity of the filler head when the cover part is removed. This allows notably to keep substantially the same filler head whatever the market, the separating device being the main component to be adapted to the market.

According to a first example, the cover part can be secured to the main part in a tighten manner by welding. Thus, a unique welding is used during the manufacturing process allowing the improvement of cycle time and associated costs.

According to a second example, the cover part can be secured to the main part in a tighten manner by snap-fitting a sealing ring between the cover part and the main part. Thus, the manufacturing process can avoid the use of welding step allowing an easier process.

Finally, the invention also relates to a storage system comprising a fluid tank connected to a filling line configured to guide the gravitational flow of fluid from a filler head to the tank and a venting line configured to compensate de pressure variations in the tank, **characterised in that** the storage system further comprises the filler head as above described.

### BRIEF DESCRIPTION OF THE DRAWINGS

Other features and advantages of the present invention will appear more clearly upon reading the following detailed description, made with reference to the annexed drawings, provided as a non-limited description, in which:
- Figure 1 is a top schematic view of a vehicle in which the present invention may be applied;
- Figure 2 is a perspective view of a filler head according to the invention;
- Figure 3 is a cross-sectional view along the plane III-III of Figure 2;
- Figure 4 is partial view of Figure 3;
- Figure 5 is an exploded view of a filler head according to the invention.

### DETAILED DESCRIPTION OF THE PREFERRED EMBODIMENTS

in the various figures, the same or similar elements bear the same references, optionally added with an index. The description of their structure and their function is therefore not systematically restated.

The expression "SCR system" is understood to mean a system for the catalytic reduction of the NOx from the exhaust gases of an internal combustion engine, preferably of a vehicle, using for example an aqueous urea solution as liquid additive. The present invention is advantageously applied to diesel engines, and in particular to the diesel engines of passenger cars, trucks or heavy vehicles.

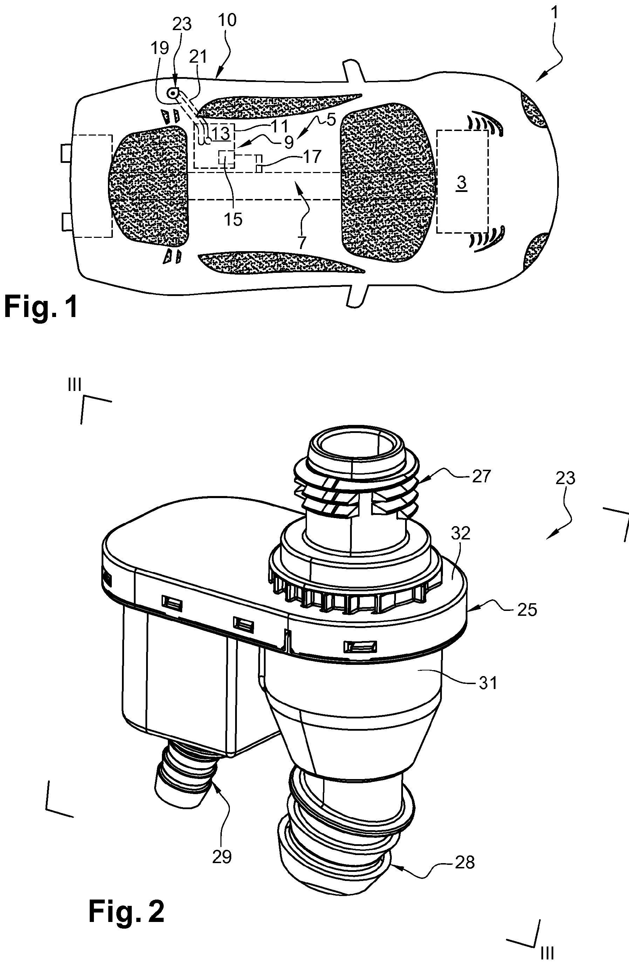

As illustrated in figure 1, the invention relates to a vehicle 1 equipped with a powertrain 3 connected to a depollution system 5. More precisely, the depollution system 5 comprises an exhaust device 7 and an additive injection device 9 in the exhaust device 7 as, for example, a urea solution.

The injection device 9 comprises a storage system 10 including a tank 11 for storing an aqueous additive 13. The injection device 9 may also include, or not, a plurality of immersed sensors in the aqueous additive 13 such as a level sensor, a temperature sensor and/or a quality sensor which can be of a capacitive effect, of the ultrasound type or of the mechanical type.

The injection device 9 also comprises a pump 15 associated with an injection element 17 which are managed by a processing unit connected to the central computer of the vehicle 1. The processing unit contains a memory in which coded instructions are stored. When coded instructions are executed by the processing unit the steps, for example, of an SCR process are performed.

The tank 11 must be regularly refilled with an aqueous additive 13 such as a urea solution or an ammonia solution. The storage system 10 thus comprises a filling line 19, a venting line 21 (also called return line) and a filler head 23. The filling line 19 is configured to guide the gravitational flow of fluid from the filler head to the tank 11. The venting line 21 is configured to compensate de pressure variations in the tank 11 during refilling by expelling, from the filler head, the air contained in the tank 11 that is compressed by the arrival of fluid in the tank 11.

Finally, the filler head 23 is configured to receive the nozzle (not shown) of fluid distribution system and to be connected, in a tighten manner, to the filling line 19 and the venting line 21. The filler head 23 thus allows, during refilling period, the fluid 13 to flow into the tank 11 and, at the same time, allows the air expelled from the tank 11 to escape into the ambient air (external atmosphere) around the vehicle 1.

The invention aims to provide a new filling system of a fluid tank that is able to withstand a great range of filling rate regardless the volume of the tank. More particularly, the invention relates to the optimization of the filler head 23 in order to limits fluid projections from the filler head during refilling, to limit number of components so as to make its manufacture easier.

Hence, as shown in Figure 2, the invention relates to a filler head 23 for a storage system 10 comprising a body 25 being configured to receive a distribution nozzle of a fluid and configured to be connected, in a tighten manner, to a filling line 19 and a venting line 21 of a fluid tank 11.

More precisely, a protruding guiding element 27 permits, along its internal diameter, to receive a distribution nozzle (not shown) so as a fluid such as an aqueous additive 13, can flow through the filler head 23. The protruding guiding element 27 is also used as a mistake-proofing device to prevent any introduction of a fuel distribution nozzle. This is achieved by the guiding element 27 having a smaller section than the fuel nozzle. Moreover, first and second outlets 28, 29 are configured to be connected, in a tighten manner, to the filling line 19 and the venting line 21 of the fluid tank 11.

As it can be seen in Figure 2, the body 25 comprises a main part 31 closed by a cover part 32. Thus, the first and second outlets 28, 29 are included, preferably in a single piece or as an integral part of, with the main part 31 and, the protruding guiding element 27, with the cover part 32. The main part 31 and the cover part 32 can be made of nylon, or another kind of polymer.

The filler head 23 further comprises a buffer volume 33 so as to reduce the speed of flow V coming from the venting line 21, *i.e.* from the second outlet 29. The buffer volume 33 also aims to burst the air bubbles along the wall thereof in order to prevent any fluid projection from the filler head 23 during refilling period.

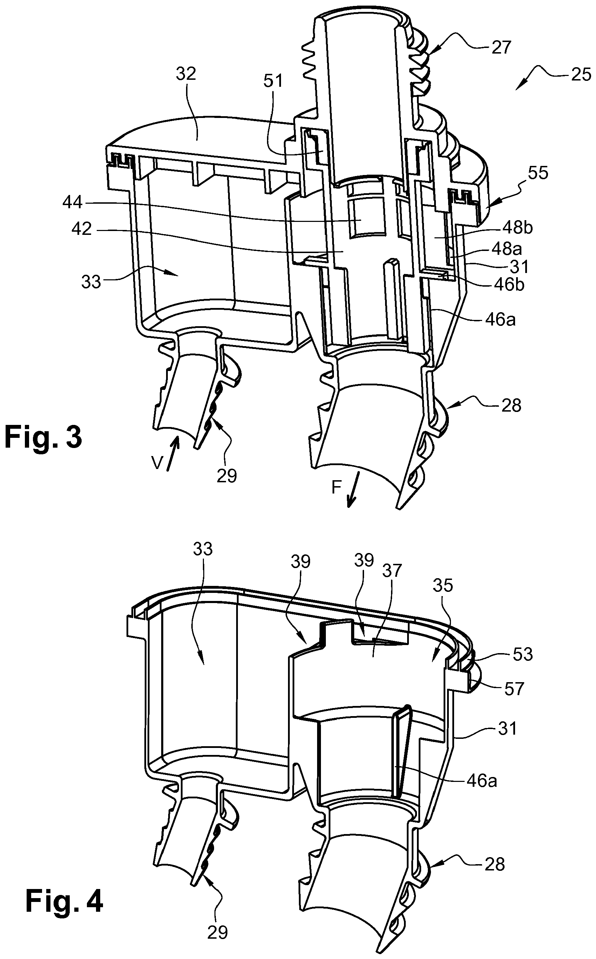

Advantageously according to the invention, the buffer volume 33 is in one-piece with the main part 31 as shown in Figure 4. Moreover, the buffer volume 33 is closed by the cover part 32 so as to improve its performance. Indeed, the buffer volume 33 can thus be positioned as far as possible from the fluid tank 11. This is a great advantage compared to a buffer volume that is implemented in the venting line or between the tank and the venting line.

Advantageously, this embodiment according to the invention allows a better reduction of the speed of flow V coming from the venting line 21 and also a better bursting of the air bubbles coming from the venting line 21 along the wall of the buffer volume 33 regardless the volume of the tank 11 and/or the filling rate of the distribution nozzle (not shown). The buffer volume 33, that contains preferably at least 100 ml, can also be thus more simply implemented.

Moreover, the unique closure with the cover part 32 allows to simplify the shape and form of the filler head 23 which is consequently easier to manufacture. Finally, the invention also allows to produce a limited number of parts permitting to improve cycle time and associated costs.

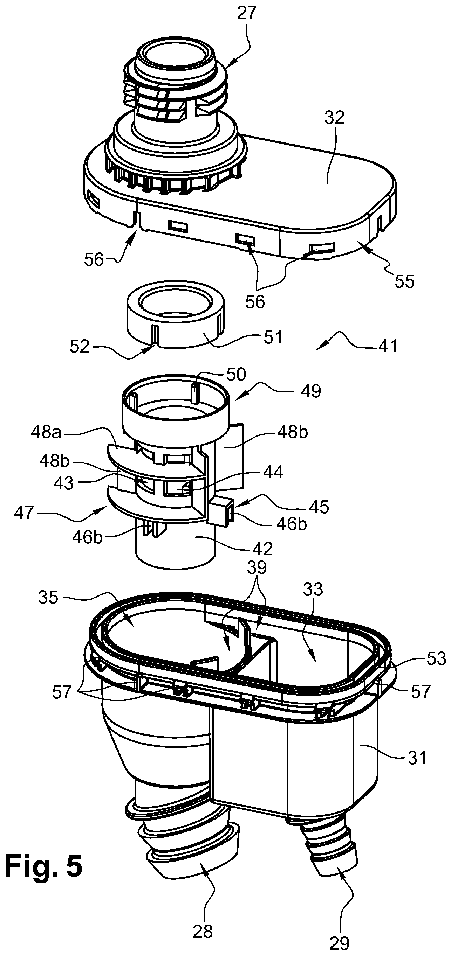

As it can be seen from Figure 5, the cover part 32 is a substantially planar part so as to position the buffer volume 33 at the same level or plane than the one of the remaining part, such as the cavity 35 as explained below, of the main part 31 of the filler head 23. The terms "substantially planar" mean that the cover part 32 is a part in three dimensions, one of the dimensions (called thickness) being limited, *i.e.* small regarding the two other dimensions. The thickness of the cover part 32 thus does not substantially form any hollow that would significantly extend the buffer volume 33 (and the cavity 35 as explained below). Typically, the thickness of cover part 32 is less than 10% of the width of the cover part 32, around 10% of the highness of the protruding guiding element 27 and less than 5% of the length of the cover part 32. In a non-limiting manner, the thickness of cover part 32 may be comprised between 3 and 7 mm in case of a welded assembly (see first example below), and between 7 and 15 mm in case of a snap-fitted assembly (see second example below). Moreover, the walls of the cover part 32 are preferably formed with a material thickness comprised between 1 and 3 mm. This notably allows, during refilling period, the end of the distribution nozzle (not shown) to be substantially levelled (co-planar) with the buffer volume 33 permitting improving of performance of the latter.

The protruding guiding element 27 can be closed in a tighten manner by a cap (not shown) notably by snap-fitting of by screwing (as shown in Figure 5). Thus, fluid such as an aqueous additive 13 coming from the venting line 21 cannot be projected outside the filler head 23. The cap (not shown) can be removed in order to refill the tank 11 with fluid.

As it can be seen in Figures 3 to 5, the body 25 comprises a cavity 35 integrated in or integral to the main part 31 in which the fluid is guided to the filling line 19 via the first outlet 28. The cavity 35 may have an enlarged section regarding the one of the filling line 19 and/or of the first outlet 28 so as to avoid the activation of the stop function of the distribution nozzle until the tank 11 is effectively full.

The cavity 35 is separated from the buffer volume 33 by a common wall 37 so as to optimize the size of the filler head 23 and to limit the number of parts of the filler head 23. It is notably apparent that the height of the filler head 23 is limited compared to the capacity of the buffer volume 33 permitting an easier implementation in the vehicle. As shown in Figures 4 and 5, at least one aperture 39 is included in the common wall 37 allowing the buffer volume 33 to communicate with the cavity 35. This implementation according to the invention allows a high degree of freedom regarding the shape and form of the main part 31. Indeed, the entirety of the top of main part 31 is completely opened, thus permitting an easier manufacture of the filler head 23.

For example, advantageously according to the invention, an edge of the apertures 39 may thus be formed by the cover part 32, *i.e.* the common wall 37 may be simply cut out and the apertures 39 may be partially framed by or be defined by or be a part of a surface of the cover part 32.

It also becomes easier to mount inserts within the main part 31 and then to secure it on the body 25 by closing it with the cover part 32. A separating device 41 can thus be mounted in the cavity 35 of the body 25 between the main part 31 and the cover part 32 so as to improve the partitioning of the flow V of air coming from the venting line 21 and the flow F of fluid going to the filling line 19 during refilling period.

The separating device 41 is preferably removable so as to be replaceable. The separating device 41 can thus be replaced with a different geometry to fit another kind or dimensions of nozzle and/or tank. This allows notably to keep substantially the same filler head (at least the same main part 31 and, possibly, the same cover part 32) whatever the market, the separating device 41 being the main component to be adapted to the market specifications (the protruding guiding element 27 may possibly also have to be adapted).

The separating device 41 can comprise a body 42 onto which at least one element may be mounted. In the example of Figures 3 and 5, a venting element 43, a securing element 45, a shielding element 47 and a supporting element 49 are represented. The venting element 43 may comprise at least one hole 44 that allows the flow V of air coming from the venting line 21 to pass through the body 42 in order to be expelled via the protruding guiding element 27 in the external atmosphere, *i.e.* outside the storage system 10. In the example of Figures 3 and 5, the venting element 43 comprises eight holes 44. Of course, the geometry and/or the number of holes 44 can vary without losing the advantage of the invention.

The securing element 45 allows the mounting of the body 42 in the cavity 35. It can thus comprise at least one fixing element such as a tenon - mortise assembly, a dovetail assembly, adhesive material, etc. In the example of Figures 3 to 5, the securing element 45 comprises four tenons 46a protruding from the internal wall of the cavity 35 that each cooperates with a corresponding mortise 46b mounted onto the external surface of the body 42. Thus, by relative translation between the main part 31 and the separating device 41, each tenon 46a slides and abuts against each corresponding mortise 46b so as to secure the body 42 in the cavity 35.

The shielding element 47 avoids any liquid in the flow V of air coming from the venting line 21 and the flow F of fluid going to the filling line 19 to be expelled from the filler head 23 notably during refilling period. It can thus comprise at least one wall such as a rib, a flange, etc. In the example of Figures 3 and 5, the shielding element 47 comprises four partial flanges 48a (substantially horizontal in Figure 5) and four transversal ribs 48b (substantially vertical in Figure 5), each protruding from the external surface of the body 42. As it can be seen in Figures 3 and 5, the shielding element 47 at least partially (or totally) surrounds the holes 44 of the venting element 43 in order to limit the passage of any liquid from the flows V and/or F, *i.e.* to allow only passage of air through the holes 44.

More specifically, the shielding element 47 aims the flow V of air coming from the venting line 21 to be expelled from the filler head 23 without any embedded urea solution. Thus, the shielding element 47 avoids any urea solution coming from either the venting line 21, or the filling line 19, to come into contact with the end of the distribution nozzle during refilling period or more generally with the protruding guiding element 27. Indeed, the partial flanges 48a (substantially horizontal in Figure 5) mainly clogs the axial passage of urea solution coming from the filling line 19 whereas the transversal ribs 48b (substantially vertical in Figure 5) mainly restrain the radial passage of urea solution coming from the venting line 21 (passing through the apertures 39). Consequently, the shielding element 47 allows any urea solution coming from either the venting line 21, or the filling line 19, to be blocked in the cavity 35 so as to return into the tank 11 mainly by the filling line 19.

The urea distribution nozzle (not shown) can be introduced in a fuel filler head. Thus, valves (not shown) for distribution nozzles that are activated by a magnetic field have been developed. Each urea filler head 23 must consequently have a magnetic element for activating the valve and allowing the delivery of aqueous additive 13. The magnetic field is generally induced by a permanent magnet that is press fitted inside the protruding guiding element 27. However, the difference of coefficient of expansion between the magnet and the protruding guiding element 27 can lead to breaks in the protruding guiding element 27 due to severe relative shrinkage/expansion notably when the filler head 23 is near the powertrain 3 occurring high variations of temperature.

Advantageously, the separating device 41 can further comprises a supporting element 49 that can receive a magnetic element 51 such as a permanent magnet. The supporting element 49 permits activation of the magnetic valve in the distribution nozzle when the latter is introduced in the protruding guiding element 27. Moreover, the magnetic element 51 is mounted in the supporting element 49 according to a clearance fit or a tight fit so as to compensate for any difference of coefficient of expansion between the magnetic element 51, the separating device 41 and the body 25 of the filler head 23. This also allows to use another kind of magnetic element 51, *i.e.* different from a permanent magnet, to generate the magnetic field such an electromagnetic coil. Moreover, this permits each of the separation device 49 and the cover part 32 to act as a positioning element of the magnetic element 51.

Preferably, the supporting element 49 also comprises a mistake-proofing device to prevent a bad orientation of the magnetic field generated by the magnetic element 51. Thus, the magnetic element 51 and the annular wall (substantially vertical in Figure 5) of the supporting element 49 can cooperate with a tenon - mortise assembly, a dovetail assembly, etc. In the example of Figures 3 and 5, the supporting element 49 comprises four ribs 50 protruding from the internal surface of its annular wall that each cooperates with a corresponding blind groove 52 in the external surface of the magnetic element 51. As shown in Figure 5, the bling groove 52 do not extent along the entire axial thickness (substantially vertical in Figure 5) of the magnetic element 51 so as to ensure its correct orientation (in opposite position, there is no opening groove 52).

Thus, by relative translation between the magnetic element 51 and the separating device 41, each rib 50 slides and abuts against the bottom (end of the groove 52 along the axial thickness of the magnetic element 51) of each corresponding groove 52 so as to guarantee the correct orientation of the magnetic element 51 in the supporting element 49. Moreover, according to the clearance fit or the tight fit between the magnetic element 51 and the supporting element 49, severe relative shrinkage/expansion of these elements 49, 51 won't break them even if the filler head 23 is mounted near the powertrain 3 occurring high variations of temperature.

Of course, alternatively, the blind groove 52 could extend along the entire thickness of the magnetic element 51 so as to guide the latter according to two opposite orientations without departing from the invention.

After being mounted within the main part 31, the separating device 41 is then secured to the body 25 by closing it with the cover part 32. Thus, the magnetic element 51 does not have to be press fitted inside the protruding guiding element 27 anymore. According to a first example, the cover part 32 is secured to the main part 31 in a tighten manner by welding. Thus, a unique welding is used during the manufacturing process allowing the improvement of cycle time and associated costs.

According to a second example, the cover part 32 is secured to the main part 31 in a tighten manner by snap-fitting a sealing ring 53 between the cover part 32 and the main part 31. Thus, the manufacturing process can avoid the use of welding step allowing easier processing. In the example of Figures 3 and 5, the snap-fitting can be carried out by a peripheral skirt 55 which is in a single piece with or integral to the cover part 32 and comprising through holes 56. The skirt 55 is configured to be elastically displaceable radially under stress. Thus, the holes 56 can each cooperate with a protruding stud 57 integrated on the external surface of the main part 31. Thus, by closing the main part 31 with the cover part 32, the shirt 55 is radially elastically pushed by abutting against the studs 57 until the holes 56 face the studs 57 so as to be snap-fitted.

Preferably, the sealing ring 53 is made of an elastomeric material. In the example of Figures 4 and 5, the sealing ring 53 has a U-shape section. It is either moulded over the top edge of the main part 31 or simply put on the top edge before snap-fitting.

Of course, the present invention is not limited to the embodiments and variants presented but may be subjected to various other embodiments and/or variants (within the scope of the appended claims), which will be apparent to those skilled in the art. It is in particular possible to further optimise the geometry of the body 25 regarding the application and/or the location of the filler head 23 in the vehicle. Thus, the filler head 23 is not limited to the refilling of a urea tank. It may also be applicable to a water tank or a fuel tank for example.

## Claims

1. Filler head (23) for a storage system (10) comprising a body (25) with a main part (31) closed by a cover part (32), and being configured to receive a distribution nozzle of a fluid and configured to be connected, in a tighten manner, to a filling line (19) and a venting line (21) of a fluid tank (11), the filler head (23) further comprising a buffer volume (33) so as to reduce the speed of flow (V) coming from the venting line (21), the buffer volume (33) is in one-piece with the main part (31) and is closed by the cover part (32) so as to limit fluid projection from the filler head (23) during refilling, **characterised in that** the body (25) comprises a cavity (35) integrated in the main part (31) and in which the fluid is guided to the filling line (19), a separating device (41) being mounted within the cavity (35) between the main part (31) and the cover part (32) so as to improve the partitioning of the flow (V) coming from the venting line (21) and the flow (F) going to the filling line (19).

2. Filler head (23) according to the preceding claim, in which the cover part (32) is a substantially planar part so as to position the buffer volume (33) at the same level than the cavity (35).

3. Filler head (23) according to claim 1 or 2, in which the cover part (32) comprises a protruding guiding element (27) permitting to receive the distribution nozzle.

4. Filler head (23) according to the preceding claim, in which the protruding guiding element (27) is closed in a tighten manner by a cap.

5. Filler head (23) according to any one of the preceding claims, in which the cavity (35) is separated from the buffer volume (33) by a common wall (37), an aperture (39) in the common wall (37) allowing the buffer volume (33) to communicate with the cavity (35).

6. Filler head (23) according to the preceding claim, in which an edge of the aperture (39) is formed by the cover part (32).

7. Filler head (23) according to any one of the preceding claims, in which the separating device (41) is removable so as to be replaceable.

8. Filler head (23) according to any one of the preceding claims, in which the separating device (41) further comprises a venting element (43) including at least one hole (44) that allows the flow (V) of air coming from the venting line (21) to pass through a body (42) of the separating device (41) in order to be expelled outside the filler head (23).

9. Filler head (23) according to any one of the preceding claims, in which the separating device (41) further comprises a shielding element (47) including at least one partial flange (48a) and/or at least one transversal rib (48b) protruding from the external surface of body (42) of the separating device (41).

10. Filler head (23) according to claim 9 depending from claim 8, in which the shielding element (47) at least partially surrounds the hole (44) of the venting element (43) in order to allow only the passage of air through the hole (44).

11. Filler head (23) according to any one of the preceding claims, in which the separating device (41) further comprises a securing element (45) including at least one tenon (46a) protruding from the internal wall of the cavity (35) that each cooperates with a corresponding mortise (46b) mounted onto the external surface of a body (42) of the separating device (41).

12. Filler head (23) according to any one of the preceding claims, in which the cover part (32) is secured to the main part (31) in a tighten manner by welding.

13. Filler head (23) according to any one of the preceding 1 to 11, in which the cover part (32) is secured to the main part (31) in a tighten manner by snap-fitting a sealing ring (53) between the cover part (32) and the main part (31).

14. Storage system (10) comprising a fluid tank (11) connected to a filling line (19) configured to guide the gravitational flow of fluid from a filler head (23) to the tank (11) and a venting line (21) configured to compensate de pressure variations in the tank (11), **characterised in that** the storage system (10) further comprises the filler head (23) according to any one of the preceding claims.

## Patentansprüche

1. Befüllkopf (23) für ein Speichersystem (10), der einen Körper (25) mit einem Hauptteil (31) aufweist, der durch einen Deckelteil (32) verschlossen ist, und der konfiguriert ist, eine Verteilungsdüse eines Fluids aufzunehmen, und der so konfiguriert ist, dass er auf dichte Weise mit einer Füllleitung (19) und einer Entlüftungsleitung (21) eines Fluidtanks (11) verbunden ist, wobei der Befüllkopf (23) ferner ein Puffervolumen (33) aufweist, um die Strömungsgeschwindigkeit (V), die von der Entlüftungsleitung (21) kommt, zu reduzieren, das Puffervolumen (33) einstückig mit dem Hauptteil (31) ausgebildet und durch den Deckelteil (32) verschlossen ist, um den Flüssigkeitsaustritt aus dem Befüllkopf (23) während des Nachfüllens zu begrenzen, **dadurch gekennzeichnet, dass** der Körper (25) einen in den Hauptteil (31) integrierten Hohlraum (35) aufweist, durch den die Flüssigkeit zur Füllleitung (19) geleitet wird, eine Trennvorrichtung (41), die in dem Hohlraum (35) zwischen dem Hauptteil (31) und dem Deckelteil (32) angebracht ist, um die Aufteilung des von der Entlüftungsleitung (21) kommenden Stroms (V) und des zur Füllleitung (19) gehenden Stroms (F) zu verbessern.

2. Befüllkopf (23) nach dem vorhergehenden Anspruch, bei dem der Deckelteil (32) ein im Wesentlichen ebenes Teil ist, um das Puffervolumen (33) auf demselben Niveau wie den Hohlraum (35) zu positionieren.

3. Befüllkopf (23) nach Anspruch 1 oder 2, bei dem der Deckelteil (32) ein vorstehendes Führungselement (27) aufweist, das die Aufnahme der Verteilerdüse ermöglicht.

4. Befüllkopf (23) nach dem vorhergehenden Anspruch, bei dem das vorstehende Führungselement (27) durch eine Kappe dicht verschlossen ist.

5. Befüllkopf (23) nach einem der vorhergehenden Ansprüche, bei dem der Hohlraum (35) durch eine gemeinsame Wand (37) von dem Puffervolumen (33) getrennt ist, wobei eine Öffnung (39) in der gemeinsamen Wand (37) eine Verbindung zwischen dem Puffervolumen (33) und dem Hohlraum (35) ermöglicht.

6. Befüllkopf (23) nach dem vorhergehenden Anspruch, bei dem ein Rand der Öffnung (39) durch den Deckelteil (32) gebildet ist.

7. Befüllkopf (23) nach einem der vorhergehenden Ansprüche, bei dem die Trennvorrichtung (41) abnehmbar und damit austauschbar ist.

8. Befüllkopf (23) nach einem der vorhergehenden Ansprüche, bei dem die Trennvorrichtung (41) ferner ein Entlüftungselement (43) mit mindestens einem Loch (44) aufweist, das es dem von der Entlüftungsleitung (21) kommenden Luftstrom (V) ermöglicht, durch einen Körper (42) der Trennvorrichtung (41) zu strömen, um aus dem Befüllkopf (23) ausgestoßen zu werden.

9. Befüllkopf (23) nach einem der vorhergehenden Ansprüche, wobei die Trennvorrichtung (41) ferner ein Abschirmelement (47) aufweist, das mindestens einen Teilflansch (48a) und/oder mindestens eine Querrippe (48b) aufweist, die von der Außenfläche des Körpers (42) der Trennvorrichtung (41) abstehen.

10. Befüllkopf (23) nach Anspruch 9 in Abhängigkeit von Anspruch 8, bei dem das Abschirmelement (47) das Loch (44) des Entlüftungselements (43) zumindest teilweise umgibt, um nur den Durchgang von Luft durch das Loch (44) zu ermöglichen.

11. Befüllkopf (23) nach einem der vorhergehenden Ansprüche, bei dem die Trennvorrichtung (41) außerdem ein Sicherungselement (45) mit mindestens einem aus der Innenwand des Hohlraums (35) herausragenden Zapfen (46a) aufweist, der jeweils mit einem entsprechenden Zapfenloch (46b) zusammenwirkt, das an der Außenfläche eines Körpers (42) der Trennvorrichtung (41) angebracht ist.

12. Befüllkopf (23) nach einem der vorhergehenden Ansprüche, bei dem das Deckelteil (32) durch Schweißen fest mit dem Hauptteil (31) verbunden ist.

13. Befüllkopf (23) nach einem der vorhergehenden Ansprüche 1 bis 11, bei dem der Deckelteil (32) durch Einrasten eines Dichtungsrings (53) zwischen dem Deckelteil (32) und dem Hauptteil (31) dicht mit dem Hauptteil (31) verbunden ist.

14. Speichersystem (10), das einen Fluidtank (11) aufweist, der mit einer Füllleitung (19) verbunden ist, die so konfiguriert ist, dass sie den Schwerkraftstrom des Fluids aus einem Befüllkopf (23) zum Tank (11) und eine Entlüftungsleitung (21), die konfiguriert ist um Druckschwankungen im Tank (11) auszugleichen, **dadurch gekennzeichnet, dass** das Speichersystem (10) ferner den Befüllkopf (23) nach einem der vorhergehenden Ansprüche aufweist.

## Revendications

1. Tête de remplissage (23) pour un système de stockage (10) comprenant un corps (25) avec une partie principale (31) fermée par une partie de couverture (32), et étant configurée pour recevoir une buse de distribution d'un fluide et configurée pour être raccordée, de manière étanche, à une conduite de remplissage (19) et à une conduite de ventilation (21) d'un réservoir de fluide (11), la tête de remplissage (23) comprenant en outre un volume tampon (33) de manière à réduire la vitesse d'écoulement (V) provenant de la conduite de ventilation (21), le volume tampon (33) est en une seule pièce avec la partie principale (31) et est fermé par la partie de couverture (32) de manière à limiter la projection de fluide de la tête de remplissage (23) lors du remplissage, **caractérisée en ce que** le corps (25) comprend une cavité (35) intégrée dans la partie principale (31) et dans laquelle le fluide est guidé vers la conduite de remplissage (19), un dispositif de séparation (41) étant monté à l'intérieur de la cavité (35) entre la partie principale (31) et la partie de couverture (32) de manière à améliorer le cloisonnement du flux (V) provenant de la conduite de ventilation (21) et du flux (F) allant à la conduite de remplissage (19).

2. Tête de remplissage (23) selon la revendication précédente, dans laquelle la partie de couverture (32) est une partie sensiblement plane de manière à positionner le volume tampon (33) au même niveau que la cavité (35).

3. Tête de remplissage (23) selon la revendication 1 ou 2, dans laquelle la partie de couverture (32) comprend un élément de guidage saillant (27) permettant de recevoir la buse de distribution.

4. Tête de remplissage (23) selon la revendication précédente, dans laquelle l'élément de guidage saillant (27) est fermé de manière étanche par un bouchon.

5. Tête de remplissage (23) selon l'une quelconque des revendications précédentes, dans laquelle la cavité (35) est séparée du volume tampon (33) par une paroi commune (37), une ouverture (39) dans la paroi commune (37) permettant au volume tampon (33) de communiquer avec la cavité (35).

6. Tête de remplissage (23) selon la revendication précédente, dans laquelle un bord de l'ouverture (39) est formé par la partie de couverture (32).

7. Tête de remplissage (23) selon l'une quelconque des revendications précédentes, dans laquelle le dispositif de séparation (41) est amovible de manière à pouvoir être remplacé.

8. Tête de remplissage (23) selon l'une quelconque des revendications précédentes, dans laquelle le dispositif de séparation (41) comprend en outre un élément de ventilation (43) comprenant au moins un trou (44) qui permet au flux (V) d'air provenant de la conduite de ventilation (21) de passer à travers un corps (42) du dispositif de séparation (41) afin d'être expulsé à l'extérieur de la tête de remplissage (23).

9. Tête de remplissage (23) selon l'une quelconque des revendications précédentes, dans laquelle le dispositif de séparation (41) comprend en outre un élément de protection (47) comprenant au moins une flasque partielle (48a) et/ou au moins une nervure transversale (48b) en saillie de la surface externe du corps (42) du dispositif de séparation (41).

10. Tête de remplissage (23) selon la revendication 9 dépendant de la revendication 8, dans laquelle l'élément de protection (47) entoure au moins partiellement le trou (44) de l'élément de ventilation (43) afin de ne permettre que le passage de l'air à travers le trou (44).

11. Tête de remplissage (23) selon l'une quelconque des revendications précédentes, dans laquelle le dispositif de séparation (41) comprend en outre un élément de fixation (45) comprenant au moins un tenon (46a) dépassant de la paroi interne de la cavité (35) qui coopère chacun avec une mortaise correspondante (46b) montée sur la surface externe d'un corps (42) du dispositif de séparation (41).

12. Tête de remplissage (23) selon l'une quelconque des revendications précédentes, dans laquelle la partie de couverture (32) est fixée à la partie principale (31) de manière étanche par soudage.

13. Tête de remplissage (23) selon l'une quelconque des revendications 1 à 11 précédentes, dans laquelle la partie de couverture (32) est fixée à la partie principale (31) de manière étanche par emboîtement élastique d'une bague d'étanchéité (53) entre la partie de couverture (32) et la partie principale (31).

14. Système de stockage (10) comprenant un réservoir de fluide (11) raccordé à une conduite de remplissage (19) configurée pour guider l'écoulement gravitationnel du fluide d'une tête de remplissage (23) vers le réservoir (11) et une conduite de ventilation (21) configurée pour compenser les variations de pression dans le réservoir (11), **caractérisé en ce que** le système de stockage (10) comprend en outre la tête de remplissage (23) selon l'une quelconque des revendications précédentes.
